# EUROPEAN PATENT SPECIFICATION

(11) **EP 0 378 639 B1**
(45) Date of publication and mention of the grant of the patent: **10.02.1993**
(21) Application number: 89907344.9
(22) Date of filing: 14.06.1989
(51) Int. Cl.: H04L 5/00, H04L 7/06, H04J 7/02

(54) **AN ARRANGEMENT FOR WIRELESS TRANSMISSION OF SIGNALS RECEIVED VIA A SERIAL TWO-CONDUCTOR DATA BUS**
ANORDNUNG ZUR DRAHTLOSEN ÜBERTRAGUNG VON EMPFANGENEN SIGNALEN ÜBER EINEN SERIELLEN DATENBUS MIT ZWEI LEITERN
DISPOSITIF POUR LA RADIOTRANSMISSION DE SIGNAUX RECUS VIA UN BUS SERIEL DE DONNEES A DEUX CONDUCTEURS

(30) Priority: 14.06.1988 SE 8802230
(43) Date of publication of application: 25.07.1990
(73) Proprietor: Henoch, Bengt, S-12657 Hägersten (SE)
(72) Inventor: Henoch, Bengt, S-12657 Hägersten (SE)
(74) Representative: Örtenblad, Bertil Tore
(86) International application number: SE8900332
(87) International publication number: WO8912935

(56) References cited:
- US-A- 4 398 178
- US-A- 4 569 045
- US-A- 4 613 974

## Description

The present invention relates to an arrangement for the wireless or non-physical transmission of signals received via a serial two-conductor data bus.

Various kinds of serial data buses are known to the art. Such buses are used to transmit data and data instructions between the different units of a computer system. A serial data bus has certain advantages in relation to a parallel data bus, such as simpler conductor layouts, smaller capsules with fewer legs for different units, etc.

US 4,398,178 shows a system for transmitting information on a.c. line. Information is transmitted on one of the phase conductors of said line in the form of series of short duration pulse like amplitude reductions which are detected in a receiver unit. The a.c. line is a power transmission line.

US 4,613,974 shows a method for modulating a carrier signal, where occurence of the peaks in the modulated carrier signal conveys clocking information and where each transition of a modulated carrier signal includes two midrange characteristics, the ratio of which represents data carried by that transmission.

However, the said two US patents do not refer to transmission of signals via a serial two-conductor data bus.

A serial data bus is normally constructed around two conductors or conductor pairs, of which one is intended for data and the other for a clock signal.

The clock signal on the clock conductor constitutes a system clock which is common to all the units connected to the serial bus and is transmitted from that unit which is the "master" unit of the serial bus at that moment in time, all other units at that time being "slaves".

Data and clock are synchronized, for instance so that the data conductor will shift value only when the clock is low. Furthermore, the sequence in which the data and clock conductors are activated from a rest state, e.g. a high state, can be used to signify the commencement and termination of a data message.

The unit which is "master" of the data bus controls subordinated "slaves", by sending queries and collecting answers on the data conductors, e.g. by reading from and writing into a memory facility connected to the bus.

In the case of some applications, there exists a need for wireless connection between a slave unit and the serial bus.

This need may be due to avoid the use of unreliable mechanical contacts, or when the slave unit shall only in the close proximity of a bus contact device on particular occasions, or when wishing to obtain a given air gap between the respective electrical contact devices of the slave unit and the bus.

Examples of such applications include electronic cash dispensers, autobanks, credit card machines, electronic keys, the marking and labelling of tools and small components, details, and the external contact with a vehicle mounted travel computer.

One problem encountered with the wireless transmission of signals received via a serial two-conductor data bus in accordance with known techniques is that two transmission devices are required, one for each conductor. Another problem resides in the provision of a transmission device which is small, of simple construction and inexpensive.

The present invention solves these problems and provides an arrangement which can be given very small dimensions and which is both simple and inexpensive.

An essential feature of the inventive arrangement is that it utilizes solely one wireless or non-physical transmission device, e.g. an inductive circuit, for transmitting both clock signals and data signals.

Furthermore, the invention enables signals to be transmitted via the serial data bus in a non-distorted state, and hence no additional interface is required to create synchronous relationships between data and clock signals.

The present invention thus relates to an arrangement for the wireless transmission of signals via a serial, two-conductor data bus, where data signals comprise a positive and a negative flank, or vice versa, which do not coincide with a positive or negative flank of the clock signals, which data bus comprises a clock conductor and a data conductor connected to a transmitter, a receiver and a demodulator, said transmitter comprising an oscillator, and further including a modulator operative to modulate the signal generated by the oscillator in dependence on the signal on the clock conductor and the data conductor respectively, and is characterised in, that on the oscillator-generated signal two significant, separate modulation steps which do not coincide in time, are carried out by said modulator, thereby forming two mutually independent signal channels, of which a first channel is intended for data and a second channel is intended for said clock; and in that demodulation of one thus modulated signal received by the receiver is carried out by said demodulator, thereby recreating said two signals; and in that said demodulator is being provided with a clock conductor output and a data conductor output.

The invention will now be described in more detail with reference to exemplifying embodiments thereof illustrated in the accompanying drawings, in which
- Figure 1 is a block shematic illustrating the construction principles of the inventive arrangement, and also shows signals occurent in a serial data bus;
- Figure 2 is a more detailed illustration of a first part of a first embodiment of the inventive arrangement;
- Figures 3a-3h illustrate signals at different points in the circuit shown in Figure 2;
- Figures 4a-4d illustrate signals at different points in the circuit shown in Figure 2 in the case of a first modulation method;
- Figures 5a-5d illustrate signals at different points in in the circuit shown in Figure 2 in the case of a second modulation method;
- Figure 6a illustrates signals at different points in the circuit shown in Figure 2 in the case of three modulation methods alternative to the first modulation method;
- Figure 6b illustrates signals at different points in the circuit shown in Figure 2 in the case of three modulation methods alternative to the second modulation method;
- Figure 7 is a block shematic of a second part of the inventive arrangement according to said first embodiment;
- Figures 8 and 9 illustrate signals at different points in the circuit shown in Figure 7;
- Figure 10 illustrates a third part of the inventive arrangement according to said first embodiment;
- Figures 11 and 12 illustrate signals at different points in the circuit shown in Figure 10;
- Figure 13 illustrates a fourth part of the inventive arrangement according to said first embodiment;
- Figure 14 illustrates signals at different points in the circuit shown in Figure 13;
- Figure 15 illustrates shematically a circuit for transmitting data in a direction opposite to that described with reference to Figures 1-14;
- Figure 16 illustrates a code key circuit;
- Figure 17 illustrates a part of a receiver and demodulator according to a second embodiment of the invention;
- Figures 18 and 19 illustrate signals from the circuit shown in Figure 17;
- Figure 20 illustrates a further part of a demodulator according to the second embodiment of the invention;
- Figures 21, 22 illustrate signals from the circuit shown in Figure 20;
- Figure 23 illustrates an alternative embodiment of a receiver and Figure 24 illustrates different signals appearing in the receiver shown in Figure 23.

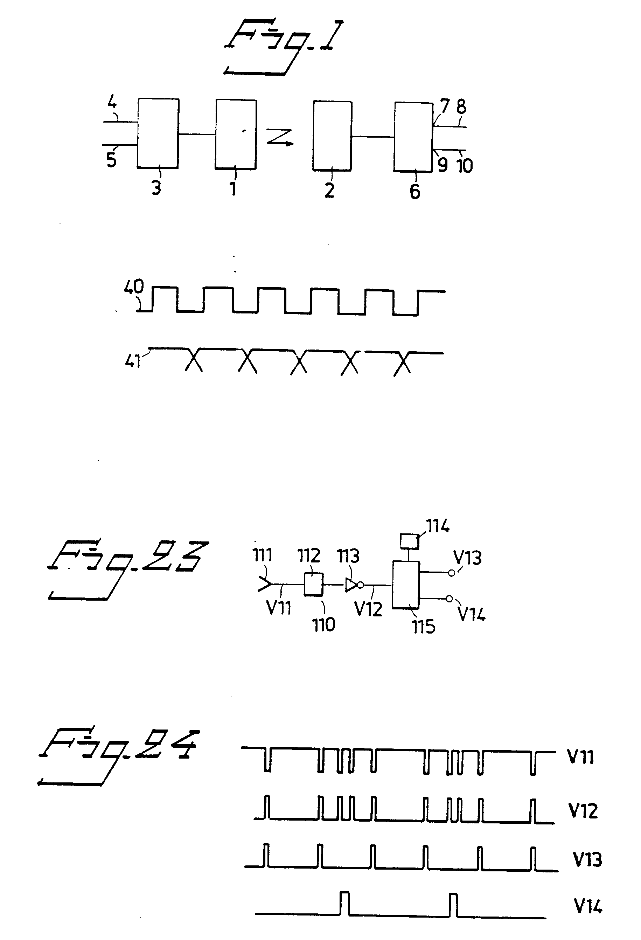

Figure 1 is a block schematic illustrating a serial two-conductor data bus which has located on the "master"-aide a transmitter which includes an oscillator 1 and which is intended to effect wireless or non-physical transmission of a signal to a receiver 2 on the "slave"-side. The transmitter includes a modulator 3 having connected thereto a clock conductor 4 and a data conductor 5 belonging to the serial bus.

The modulator is constructed to modulate the signal produced by the oscillator, said modulated signal being transmitted.

The receiver 2 is constructed to apply the received signal to a demodulator 6, which has an output 7 for the clock bus clock conductor 8 and an output 9 for the bus data conductor 10. The demodulator 6 is constructed to recreate or reconstruct the contents of the signals on the clock conductor 4 and the data conductor 5 respectively.

Figure 1 illustrates two signals, of which the upper signal 40 is the clock signal, i.e. the signal present on the conductor 5. The lower signal 41 is the data signal, i.e. the signal present on the conductor 4. A characteristic feature of a serial data bus is that the data signals 42, which are illustrated with a cross in the signal curve 41, comprise a positive and a negative flank, or vice versa, which do not coincide with a positive or negative flank of the clock signal.

Thus, in the case of a serial data bus of the kind meant here, the clock signal and the data signal are mutually synchronized in time.

In accordance with the invention, the modulator 3 is constructed to execute on the signal produced by the oscillator two significant, separate modulation steps which do not coincide in time, therewith to form two mutually independent signal channels, of which a first channel 4,8 is intended for data and the other channel 5,10 is intended as a clock. The demodulator 6 is constructed to demodulate a modulated signal received by the receiver 2 and to recreate the two modulator input signals 4,5.

As will be apparent from the following, the present invention enables signals to be transmitted on two mutually independent channels, one for data and one for the clock, with the aid of solely a single wireless or non-physical transmission device.

According to a first preferred embodiment, the frequency generated in the oscillator 1 can be compared with the data speed applied, and is therewith in the order of kHz.

According to one preferred embodiment, the aforesaid wireless transmission is effected with the aid of an inductive transmission device, in which both the transmitter and the receiver include a coil 11,12, see Figure 2.

Figure 2 illustrates schematically a first embodiment of an inventive arrangement in which the oscillator 1 drives an alternating current I through the transmitter coil 11, see Figure 3a, said alternating current being, for instance, sinusoidal. An alternating voltage VIN is generated inductively in the receiver coil 12, see Figure 3b. The receiver 2 includes a rectifying bridge 20 and a smoothing capacitor 21, whereby a d.c. voltage VO′, occurs between the poles 22,23, see Figure 3d.

Figure 3c illustrates the voltage at the point VO in relation to earth, the previously negative half cycles being shown in broken lines for the sake of clarity.

The demodulator 6 includes two logic circuits 30,31, of which a first circuit 30 is connected across a diode 32 in the rectifying bridge 20, such as to take out the positive half cycles, of the received signal, see Figure 3e, and of which the other circuit 31 is connected across a diode 33 in the rectifying bridge such as to take out the negative half cycles, see Figure 3f. The logic circuits 30,31 are constructed so as to produce on their respective outputs 34,35 a pulse train which corresponds to the positive and negative half cycles respectively, see Figures 3g and 3h respectively. The logic circuits 30,31 are preferably operational amplifiers which have a speed sufficient to convert a sinus signal of oscillator frequency f to a pulse train of repetition frequency f.

In addition to the direct voltage VO′, the arrangement hitherto described will thus provide a first channel 34 for positive half cycles and a second channel 35 for negative half cycles.

In accordance with the invention, these two channels are utilized to form two mutually independent signal channels, one for data and one for clock. As before mentioned, the modulator 3 is constructed to carry out two significant, separate modulation steps. In this respect, the modulator 3 is constructed to effect the two respective modulation steps on two significant different respective parts of the signal produced by the oscillator.

More specifically, the modulator 3 is constructed to create said first channel 4,8;34, by executing a modulation step in which solely the d.c. voltage positive half cycles produced by the oscillator are modulated, and to create said second channel 5,10;35 by executing a modulation step in which solely the d.c. signal negative half cycles produced by the oscillator are modulated.

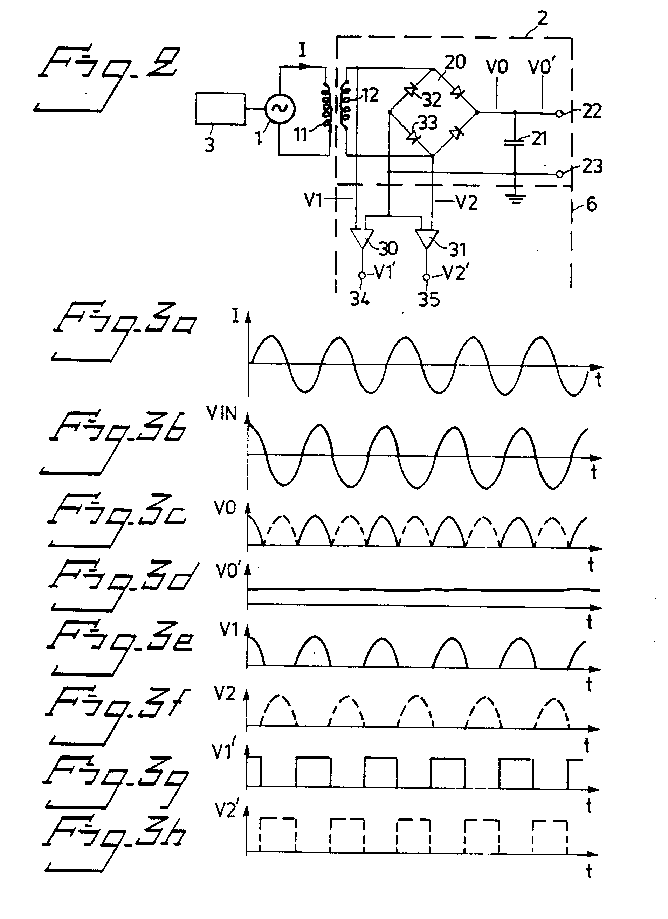

Figures 4a-4d and Figures 5a-5d illustrate principle signals I, VIN, V1′ and V2′ according to Figure 2. Figures 4a-4d relate to the modulation of positive half cycles of the oscillator signal I (MOD.POS.) and Figures 5a-5d relate to the modulation of negative half cycles (MOD.NEG.).

As will be seen from Figures 4a and 5a, the modulator 3 has modulated the sinusoidal oscillator signal I so that the current I is constant where a centre half cycle in Figures 4a, 5a should have been varied.

These modulations give rise to a voltage VIN across the receiver coil 12, as illustrated in Figure 4b and 5b respectively. Figures 4c and 5c and Figures 4d and 5d illustrate respectively the pulse train obtained at points 34 and 35 respectively, i.e. V1′ and V2′ respectively.

Figures 4a and 5a illustrate a modulation step in which a full half cycle is replaced with a constant level of current strength, so to say.

Seen from top to bottom, each of Figures 6a and 6b illustrate three different modulation forms of I and the voltages VIN, V1′ and V2′ resulting from these modulations. Figure 6a also illustrates modulation of positive half cycles. In a corresponding manner, Figures 6b illustrate three different modulation forms of negative half cycles and the voltages VIN, V1′ and V2′ resulting from these modulations.

According to one preferred embodiment of the invention, the modulator 3 is constructed to modulate the half cycles so that in the signal transmitted by the transmitter the amplitude of a modulated half cycle is constant during a part of the half cycle or during the whole of said half cycle, as illustrated in Figures 4, 5 and 6.

Figure 2 shows only a part of what can be referred to as the demodulator 6. The demodulator 6 namely also includes circuits for separating modulated positive half cycles and modulated negative half cycles respectively.

It will be seen from the examples illustrated in Figures 4, 5 and 6 that the different modulation forms give rise to pulse trains in the channels 34 (V1′) and 35 (V2′) which are characteristic with respect to pulse position and pulse width.

In the following, the modulation form illustated in Figures 4a-4d and 5a-5d is taken as an example to describe that two mutually independent signal channels are formed, namely one channel for data and one channel for the clock.

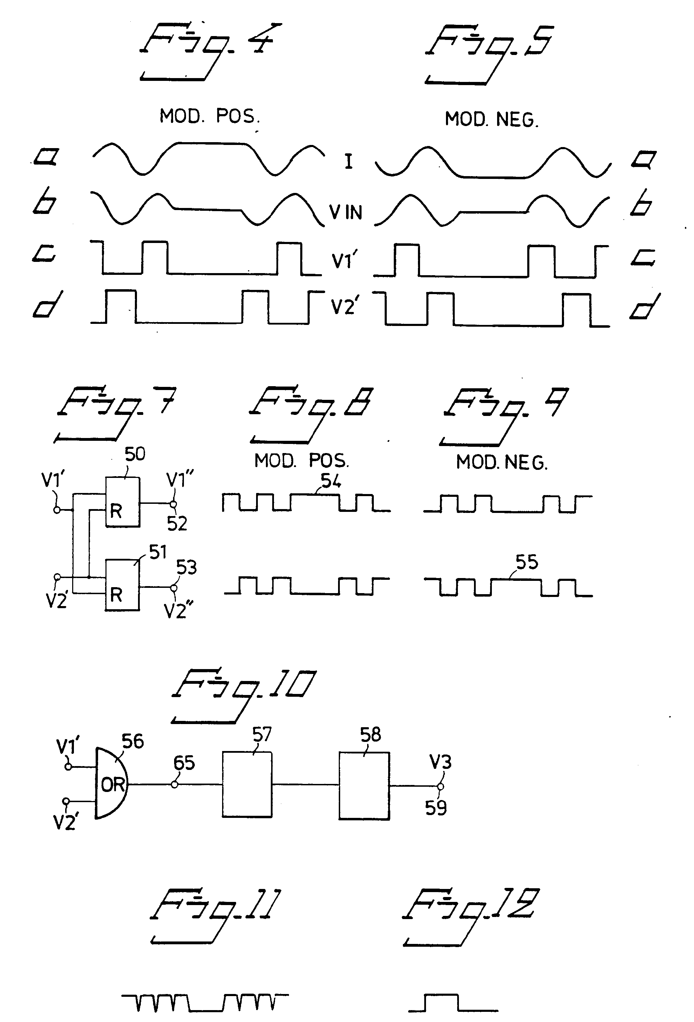

According to one preferred embodiment of the invention, the respective outputs 34,35 of the logic circuits 30,31 are connected to two so-called single-step counters 50,51 or corresponding known circuits, see Figure 7, in a manner such that there is obtained a characteristic signal on the output 52 of the first counter 50 when a positive half cycle of the current I has been modulaled by means of the modulator, and such that a characteristic signal is obtained on the output 53 of the second counter 51, when a negative half cycle has been modulaled.

As illustrated in figure 7, the points 34 and 35 are entered into the two counters, where the one channel provides a so-called reset (R) signal.

So-called latch circuits, such as RS-latch 4013 with complementary outputs, can be used instead of single-step counters.

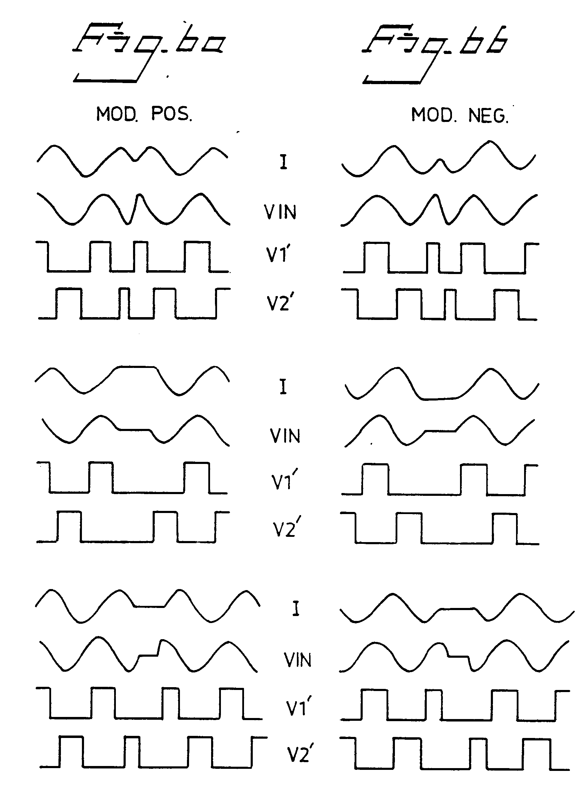

As illustrated in figures 8 and 9, the output 52 produces a signal V1˝ (across the left-hand curve) with a long pulse 54 when modulating a positive half cycle, whereas the output 53 produces a signal V2˝ (lower right-hand curve), which presents a long pulse 55 for modulation of a negative half cycle.

The respective outputs of the logic circuits 30,31 are connected to a trigger circuit which includes an OR-gate 56, see Figure 10, a low-pass filter 57 and an inverting circuit 58. The output 59 of the trigger circuit is connected to two so-called latch circuits 60,61, see Figure 13, of which the one, 60, of the latch circuit inputs 62 is connected to the output 52 from said first single-step counter 50, and where the second, 61, of the latch circuit inputs is connected to the output 53 from the other single-step counter 51.

The output 65 from the OR-gate 56 has the signal illustrated in Figure 11 in the event of the modulation of a positive or negative half cycle. Subsequent to passing through the low-pass filter and being inverted, the signal V3 on the output 59 will have the appearance illustrated in Figure 12, i.e. a long pulse. The positive pulse flank is used to guide data collection from the input 62 and 63, see Figure 13.

The latch circuits 60,61 which are triggered with the signal V3, are constructed so that their respective outputs 66,67 will shift values when both respective inputs 62,63 are high and a positive flank of the trigger pulse V3 (see Figure 12) from the trigger circuit prevails.

The outputs 66,67 represent two mutually independent signal channels, illustrated in Figure 15, namely one channel 66 for data and one channel 67 for the clock. These outputs 66,67 can be connected to a serial, two-conductor data bus or to a component adapted thereto.

It is thus clear that the data signal 4 has been recreated at the output 66, which corresponds to the output 7 of the Figure 1 embodiment, and that the clock signal has been recreated at the output 67, which corresponds to the output 9 of the Figure 1 embodiment. Thus, the signals V1′˝ and V2′˝ are present in two mutually independent signal channels.

The signal channel, 4,8 intended for data shall also enable data to be transmitted back from the "slave" side to the "master" side.

This is achieved in accordance with one preferred embodiment of the invention, by connecting a circuit 70 to the output 66 as illustrated in Figure 15. The output 66 is connected to the input 71. The circuit 70 includes two series-connected inverters 72,73 and an output 74. Connected in parallel across the inventer 72,73 is an exclusive-OR-gate 75 having an output 76.

When data is transmitted from the "master" side 1,3 to the "slave" side 2,6, V4 is dependent on V1˝′ and therewith equal, and hence the output 76 from the exclusive-OR-gate 75 is constantly zero.

When data is to be transmitted from the "slave" side to the "master" side, a signal V4 is applied on the output 74. In this instance no data is transmitted from the "master" side, and hence V1′˝ will lie constantly on one, for instance. The output 76 on the gate 75 will then vary with the applied V4 and this signal is used to control the receiver 2, in accordance with a suitable known method, to effect transmission to the "master" side.

For instance, the signal on the output 76 can be used to change the impedance of the receiver coil 12, by short circuiting the receiver coil 12 or by activating and deactivating a connected impedance. Such an impedance change can be detected as changes in the current strength in the transmitter coil 12, with the aid of suitable known circuits, and filtered out to a data signal in the data channel 4.

Although not shown, the signal on the output 76 can be used alternatively to control means for retransmitting a signal which is a harmonic or sub-harmonic of the frequency generated by the oscillator 1, or can be used to control a separate oscillator connected across the coil 12.

An overtone, or harmonic, can be created by disturbing the balance in the rectifying bridge.

When retransmissing data from the "slave" side there is utilized an interruption in transmission through the data conductor on the "master" side, which results in a time gap in which the "slave" side can send a data bit.

The modulation principle characteristic of the first embodiment of the invention, namely the modulation of positive and negative half cycles in a transmitted signal, implies that in the case of certain wireless or non-physical transmission devices rotation of the transmission device through 180° will result in reversal of the signal channels. This can be resolved by transmitting a predetermined number of modulation cycles in a given one of said channels when establishing communication, wherein the corresponding signal channel on the "slave" side, which detects the modulation cycles via a circuit of some suitable known kind, is connected to the correct data bus conductor.

In the case of the first embodiment, there are utilized modulations which do not coincide in time.

The fact that the modulations do not coincide in time, but occur at mutually different times, does not constitute a limitation in a two-conductor serial data bus, since in the case of a data bus of this kind the data signal and the clock signal are mutually synchronized so that a switch from a low to a high signal, and vice versa, in the one channel will never occur at the same time as a switch in the other channel.

This fact is also utilized in a second embodiment of the invention, described here below.

According to this second embodiment, there is used a carrier wave, which is modulated. The frequency of the carrier wave may be high, or very high, in relation to the data speed and the carrier wave can be transmitted by means of an antenna or aerial on the "master" side and "slave" side respectively.

By high carrier wave frequency is meant a frequency which is so high that the carrier wave will pass through many cycles even in the case of the shortest modulation pulse, such that the rise and fall times of the pulse will not be influenced significantly by the frequency of the carrier wave.

Referring to Figure 1, the modulator 3 of the second embodiment is constructed to modulate a carrier wave generated by the oscillator 1 and to carry out two respective modulation steps thereon.

According to the second embodiment, the modulator 3 is constructed to carry out said two respective modulation steps such that in a first modulation step the carrier wave is transmitted over a predetermined short time period, and such that in the second modulation step the carrier wave is transmitted for a predetermined long time period, of which time periods said short time period is significantly longer than a given predetermined reference time period, and in which said long time period is significantly shorter than said reference time period.

In this respect, the modulator is constructed to transmit the carrier wave over the shorter time period when the data conductor 4 switches from a high to a low signal, and vice versa, or when marking the signal level, and is constructed to effect modulation during the longer time-period when a switch or marking occurs in the clock conductor 5.

Figure 17 illustrates schematically a receiver 100, which includes an antenna 101 and a rectifier 102, which includes a detector diode, said rectifier being intended to rectify the received carrier wave and therewith reproduce the modulation signal to the modulator 3.

The demodulator includes a time comparison circuit 103,104 which triggers off positive flanks in the received signal and has a so-called hold-time which is significantly long in relation to short data pulses, and which is significantly short in relation to long data pulses. A hold-time is thus said reference time.

In the case of one embodiment of the invention, the time comparison circuit comprises a monostable multivibrator which is connected in a non-feedback mode, i.e. the hold-time is determined by an RC-circuit 104 connected to the multivibrator and defining a reference time. The multivibrator may, for instance, be an HCC/HCF 4538. When a pulse train is applied to the input, the monostable multivibrator 103 is operative, together with the RC-circuit, in giving each positive flank on the output a pulse having a duration which is equal to said hold-time or reference-time, as illustrated in Figure 18.

The signals obtained on the two outputs 105,106 in this way, one from the multivibrator and one direct from the detector diode, are exemplified in Figures 18 and 19 as V5 and V6 respectively.

As illustrated in Figure 20, the outputs 105 and 106 are connected to two flip-flop circuits 109,110 of the D-type, such as MC 14013B, on the data input D of respective circuits 109,110. The outputs 105,106 are also applied to the clock input C of respective flip-flop circuits, via a respective inverting circuit 107,108. The clock input C of respective circuits 109,110 triggers on negative flanks in the received original signal.

There is also provided a suitable, known detector 111 for detecting positive flanks in the signal obtained from the output 105 or 106. The detection of positive flanks causes the detector 111 to produce a so-called reset-signal on the reset input R of the two flip-flop circuits, 109,110.

The flip-flop circuits convert the pulse trains V5 and V6 on the outputs 105 and 106 into two signals, a data signal V7, which occurs on the output 112 of the one 109 of said flip-flop circuits, and a clock signal V8 on the output 113 of the other 110 of said flip-flop circuits, the signals V7,V8 being illustrated in Figures 21 and 22.

The flip-flop circuits now function such that in the case of a negative flank in the signal V6, the output 112 of the circuit 109 will present the signal V5, which is the signal V7 in Figure 22, whereas in the case of a negative flank in the signal V5, the signal V6 will be applied to the output 113 of the circuit 110, this signal being the signal V8 in Figure 21.

The modulation steps applied to the modulator 3 via the conductors 4,5 have herewith been recreated and separated to provide mutually independent data and clock conductors on the slave side.

Those flanks of the signals 18,19 which cause a signal change to take place in the clock conductor V8 and data conductor V7 respectively, via the flip-flop circuits 109,110, are marked with broken lines between Figures 18, 19, 21 and 22.

An alternative method of separating the data and clock conductors, by transmitting the carrier wave over markedly short and long time periods is described in the following.

The interruptions in transmission are now used as information carriers, wherein, for instance, switching or marking of levels in the clock conductor 5 initiate a first modulation step or occurrence, constituting a short transmission interruption, whereas level switching or marking in the data conductor 4 initiates a second modulation step or occurrence, constituting two interruptions in transmission in rapid sequence.

Figure 23 illustrates the circuits capable of being used to demodulate and separate these modulation steps.

The embodiment illustrated in Figure 23 includes a receiver 110, comprising an antenna 111, a dectector 112 and an inverting amplifier 113. The receiver is connected to a two-step binary counter 115 to which there is connected a time delay circuit 114 of similar construction to the multivibrator 103 with RC-circuit 104, illustrated in Figure 17. The time delay circuit 114 decides when the levels on the outputs of the counter are de-activated, and then sets the counter to zero. In this way, the first step V13 of the counter will show the modulation step with a single transmission interruption and the other step V14 will show a modulation step with a double interruption in transmission.

For the purpose of retransmitting data from the "slave" side to the "master" side, there is used a circuit of the kind previously described with reference to Figure 15, where the point 71 in Figure 15 is connected to the point 112 in Figure 20.

In this case, the output 76 can be connected to a modulator, which may be the aforesaid detector diode 102, or to an oscillator connected to the detector diode. The output 76 is herewith able to control the impedence of the detector diode, a carrier wave rereflected from the antenna.

A separate oscillator may also be used for signal retransmission. This oscillator frequency is then modulated by means of a modulator controlled by the signal on the output 76.

According to this further embodiment, the carrier wave is transmitted constantly with short breaks in transmission. Consequently, during the time period which passes between the time at which the RC-circuit output is low, which marks the end of the reference time, to the next flank in the data conductor 4 or the clock conductor 5, an unmodulated carrier wave is transmitted to the modulator 3 from the "master" side to the "slave" side.

This time period is preferably used to retransmit data, as before described.

Since the carrier wave is constantly transmitted, with the exception of the interruptions in transmission, the DC-signal obtained in the receiver subsequent to rectification can be used as an energy source in the receiver.

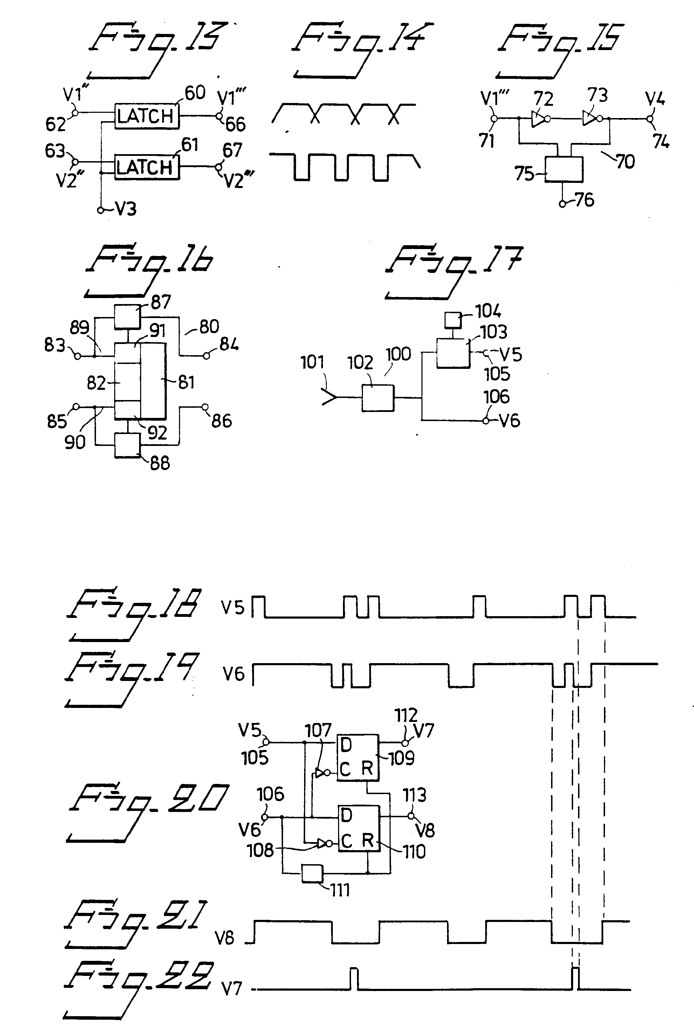

In some applications, it is desirable that entrance to the serial data bus on the "slave" side is controlled by a code. Figure 16 illustrates schematically a code key arrangement 18 which includes a fixed memory 81 and a shift register 82, and the requisite logic circuits 91,92 of a known kind. The points 83 and 84 are connected along the one conductor and the points 85 and 86 along the other conductor of the serial bus. Located along the one conductor is a first electronic switch 87, while a second electronic switch 88 is located along the other conductor.

A code is stored in the fixed memory.

When desiring access to the serial bus, a pulse train of predetermined configuration is transmitted in either one or both of the two signal channels. The code, in the form of pulse trains in the shift register is fed-in through the conductors 89,90, whereafter the code stored in the shift register 82 is compared with a code in the fixed memory 81.

If the codes coincide, the logic circuits 91,92 will close the electronic switches 87,88, such as to connect the respective points 83,84 and 85,86.

It will be evident from the foregoing that in the case of the two described embodiments signals are transmitted via a serial two-conductor data bus in a wireless or non-physical fashion by means of only one transmission device, where a separate data channel and a separate clock signal are regenerated subsequent to transmission.

## Claims

1. An arrangement for the wireless transmission of signals received via a serial, two-conductor data bus, where data signals comprises a positive and a negative flank, or vice versa, which do not coincide with a positive or negative flank of the clock signals, which data bus comprises a clock conductor (4) and a data conductor (5) connected to a transmitter, a receiver (2) and a demodulator (6), said transmitter comprising an oscillator (1), and further including a modulator (3) operative to modulate the signal generated by the oscillator in dependence on the signal on the clock conductor and the data conductor respectively, **characterised in**, that on the oscillator-generated signal, two significant, separate modulation steps, which do not coincide in time, are carried out by said modulator (3), thereby forming two mutually independent signal channels (4, 8; 5, 10), of which a first channel (4, 8) is intended for data and a second channel (5, 10) is intended for said clock; and in that demodulation of the one thus modulated signal received by the receiver (2) is carried out by said demodulator, thereby recreating said two signals; and in that said demodulator is provided with a clock conductor output (9; 67; 113) and a data conductor output (7; 66; 112).

2. An arrangement according to Claim 1, **characterised** **in** that the modulator (3) is operative to carry out said two respective modulation steps on two significant, different respective parts of the signal generated by the oscillator (1).

3. An arrangement according to Claim 1 or 2, **characterised** in that the modulator (3) is operative to create said first channel (4,8), by executing a modulation step in which solely the positive half cycles of the alternating signal generated by the oscillator (1) are modulated; and in that said modulator (3) is operative to create said second channel (5,10) by carrying out a modulation step in which solely the negative half cycles of the alternating signal generated by the oscillator (1) are modulated.

4. An arrangement according to Claim 1, 2 or 3, **characterised** in that the modulator (3) is operative to modulate said half cycles such that the amplitude of a modulated half cycle in the signal (I) transmitted is constant during the whole of said half cycle or during a part thereof.

5. An arrangement according to Claim 1, 2, 3 or 4, **characterised** in that said wireless trans**m**ission is effected with the aid of an inductive transmission device, where both the transmitter (1) and the receiver (2) include a coil (11, 12).

6. An arrangement according to Claim 3, 4 or 5, **characterised** in that the receiver (2) includes a rectifying bridge (20); in that said demodulator (6) includes two logic circuits (30,31), of which a first circuit (30) is connected across a diode (32) in the rectifying bridge such as to take out the positive half cycles of the received signal, and of which a second circuit (31) is connected across a diode (33) in the rectifying bridge such as to take out the negative half cycles of the received signal; in that the logic circuits (30,31) are arranged to produce on their respective outputs (34;35) a pulse train (V1′;V2′) corresponding to the positive and the negative half cycles respectively; and in that the demodulator (6) includes circuits (50,51,60,61) for separating modulated positive half cycles from modulated negative half cycles.

7. An arrangement according to Claim 6, **characterised** in that the outputs (34,35) of the two logic circuits (30,31) are connected to two so-called single-step counters (50,51) or corresponding devices, in a manner such to obtain a characteristic signal (V1′˝) on the output (52) of the first single-step counter (50) when a positive half cycle is modulated by means of the modulator (3), and such as to obtain a characteristic signal (V2′˝) on the output (53) of the other single-step counter (51) when a negative half cycle is modulated.

8. An arrangement according to Claim 6 or 7, **characterised** in that the outputs (34,35) of the logic circuits (30,31) are connected to a trigger circuit (56-58) which comprises an OR-gate (56), a low-pass filter (57) and an inverting circuit (58), the output (59) of which trigger circuit is connected to two so-called latch-circuits (60,61), wherein the one input (62) of said latch-circuit (60) is also connected to the output (52) of the first single-step counter (50), and wherein the other input (63) of said latch-circuits is connected to the output (53) of the other single-counter (51).

9. An arrangement according to Claim 1, **characterised** in that the modulator (3) is operative to modulate a carrier wave and to carry out said two respective modulation steps in a manner such that a first modulation step results in the transmission of said carrier wave over a predetermined short time period and such that the second modulation step results in transmission of the carrier wave over a predetermined long time period, of which periods the short time period is significantly shorter than the duration of a given, predetermined reference time and that the long time period is significantly longer than said reference time.

10. An arrangement according to Claim 9, **characterised** in that the first modulation step is used for the data conductor (4,8) and the second modulation step is used for the clock conductor (5,10).

11. An arrangement according to Claim 9 or 10, **characterised** in that the carrier frequency is high in relation to data speed.

12. An arrangement according to Claim 9, 10 or 11, **characterised** in that the receiver (2;100) includes a rectifier (102) which is operative to rectify the received carrier wave and therewith recreate the modulation signal to the modulator (3).

13. An arrangement according to Claim 9, 10, 11 or 12, **characterised** in that the receiver (2;100) is operative to recreate the modulation signal to the modulator (3); and in that the demodulator (6) includes a time comparison circuit (103,104) constructed to compare the pulse length of the various pulses received with said reference time; and in that the demodulator (6) is provided with two outputs (112,113) and is constructed to produce a data conductor signal (V7) on a first (112) of said outputs and to produce a clock conductor signal (V8) on the other (113) of said outputs.

14. An arrangement according to Claim 13, **characterised** in that the demodulator (6) includes a detector diode in the rectifier; and in that the time comparison circuit includes a multivibrator (103) and an RC-circuit (104).

15. An arrangement according to Claim 14, **characterised** in that the output (105) of the multivibrator (103) and the output (106) of the detector diode are connected respectively to the inputs of two flip-flop circuits (109,110) which are intended to be triggered by a detector (111) for the detection of flanks in the signal from both of these last mentioned outputs (105,106); and in that the flip-flop circuits (109,110) are operative to recreate signals delivered to the modulator (3)?, of which flip-flop circuits, one circuit (109) is operative in producing the data signal (V7) and the other circuit (110) is operative in producing the clock signal (V8).

16. An arrangement according to Claim 14 or 15, **characterised** in that said detector diode is a modulator operative to retransmit data, where a signal is applied to the detector diode, said detector diode being intended to change impendance.

17. An arrangement according to any one of Claims 9-16, **characterised** in that the modulator is operative to modulate the carrier wave such that the first modulation step results solely in a short interruption in transmission and such that the second modulation step results in two short interruptions in transmission.

## Patentansprüche

1. Anordnung für die drahtlose Übertragung von Signalen, die über einen seriellen Datenbus mit zwei Leitern empfangen werden, wobei Datensignale eine positive und eine negative Flanke oder umgekehrt aufweisen, die nicht mit einer positiven oder einer negativen Flanke der Taktsignale zusammenfallen, wobei der Datenbus an einen Übertrager angeschlossen einen Taktsignalleiter (4) und einen Datenleiter (5) aufweist, einen Empfänger (2) und einen Demodulator (6), wobei der Übertrager einen Oszillator (1) aufweist, und wobei weiterhin ein Modulator (3) vorgesehen ist, der derart wirkt, daß er das von dem Oszillator erzeugte Signal in Abhängigkeit von dem Signal auf dem Taktsignalleiter und dem Datenleiter moduliert, dadurch **gekennzeichnet**, daß auf dem oszillatorerzeugten Signal von dem Modulator (3) zwei signifikante, getrennte Modulationsschritte ausgeführt werden, die zeitlich nicht zusammenfallen, wodurch zwei voneinander unabhängige Signalkanäle (4, 8; 5, 10) gebildet werden, von denen ein erster Kanal (4, 8) für Daten und ein zweiter Kanal (5, 10) für das Taktsignal vorgesehen ist, und daß eine Demodulation des einen derart modulierten Signals, das von dem Empfänger (2) empfangen wird, von dem Demodulator ausgeführt wird, wodurch die zwei Signale neu gestaltet werden, und daß der Demodulator mit einem Taktsignalleiterausgang (9; 67; 113) und einem Datenleiterausgang (7; 66; 112) versehen ist.

2. Anordnung nach Anspruch 1, dadurch **gekennzeichnet**, daß der Modulator (3) derart wirkt, daß er die zwei entsprechenden Modulationsschritte auf zwei signifikanten, unterschiedlichen Teilen des von dem Oszillator (1) erzeugten Signals ausführt.

3. Anordnung nach Anspruch 1 oder 2, dadurch **gekennzeichnet**, daß der Modulator (3) derart wirkt, daß er den ersten Kanal (4, 8) erzeugt, indem ein Modulationsschritt ausgeführt wird, in dem nur die positiven Halbzyklen des von dem Oszillator (1) erzeugten alternierenden Signals moduliert werden, und daß der Modulator (3) derart wirkt, daß er den zweiten Kanal (5, 10) erzeugt, indem ein Modulationsschritt ausgeführt wird, in dem nur die negativen Halbzyklen des von dem Oszillator (1) erzeugten alternierenden Signals moduliert werden.

4. Anordnung nach Anspruch 1, 2 oder 3, dadurch **gekennzeichnet**, daß der Modulator (3) derart wirkt, daß er die Halbzyklen derart moduliert, daß die Amplitude eines modulierten Halbzyklus in dem übertragenen Signal (I) während des gesamten Halbzyklus oder während eines Teils davon konstant ist.

5. Anordnung nach Anspruch 1, 2, 3 oder 4, dadurch **gekennzeichnet,** daß die drahtlose Übertragung mit Hilfe einer induktiven Übertragungseinrichtung bewirkt wird, wobei sowohl der Übertrager (1) als auch der Empfänger (2) eine Spule (11, 12) aufweisen.

6. Anordnung nach Anspruch 3, 4 oder 5, dadurch **gekennzeichnet**, daß der Empfänger (2) eine Gleichrichterbrücke (20) aufweist, daß der Demodulator (6) zwei Logikschaltungen (30, 31) aufweist, von denen eine erste Schaltung (30) über eine Diode (32) in der Gleichrichterbrücke derart angeschlossen ist, daß die positiven Halbzyklen des empfangenen Signals herausgenommen werden, und von denen eine zweite Schaltung (31) über eine Diode (33) in der Gleichrichterbrücke derart angeschlossen ist, daß die negativen Halbzyklen des empfangenen Signals herausgenommen werden, daß die Logikschaltungen (30, 31) derart angeordnet sind, daß sie an ihren entsprechenden Ausgängen (34, 35) eine Pulsfolge (V1′; V2′) erzeugen, die den positiven und den negativen Halbzyklen entspricht, und daß der Demodulator (6) Schaltungen (50, 51, 60, 61) zur Trennung modulierter positiver Halbzyklen von modulierten negativen Halbzyklen aufweist.

7. Anordnung nach Anspruch 6, dadurch **gekennzeichnet**, daß die Ausgänge (34, 35) der zwei Logikschaltungen (30, 31) an zwei sogenannten Einzelschrittzählern (50, 51) oder entsprechenden Einrichtungen in einer derartigen Weise angeschlossen sind, daß ein charakteristisches Signal (V1′˝) an dem Ausgang (52) des ersten Einzelschrittzählers (50) erhalten wird, wenn ein positiver Halbzyklus mittels des Modulators (3) moduliert ist, und daß ein charakteristisches Signal (V2′˝) an dem Ausgang (53) des anderen Einzelschrittzählers (51) erhalten wird, wenn ein negativer Halbzyklus moduliert ist.

8. Anordnung nach Anspruch 6 oder 7, dadurch **gekennzeichnet,** daß die Ausgänge (34, 35) der Logikschaltungen (30, 31) mit einer Triggerschaltung (56 bis 58) verbunden sind, die ein OR-Gatter (56), einen Tiefpaßfilter (57) und eine invertierende Schaltung (58) aufweist, wobei der Ausgang (59) der Triggerschaltung mit zwei sogenannten latch-Schaltungen (60, 61) verbunden ist, wobei der eine Eingang (62) der Latch-Schaltung (60) außerdem mit dem Ausgang (52) des ersten Einzelschrittzählers (50) verbunden ist, und wobei der andere Eingang (63) der Latch-Schaltungen mit dem Ausgang (53) des anderen Einzelschrittzählers (51) verbunden ist.

9. Anordnung nach Anspruch 1, dadurch **gekennzeichnet**, daß der Modulator (3) derart wirkt, daß er eine Trägerwelle moduliert und daß er die zwei Modulationsschritte in einer derartigen Weise ausführt, daß ein erster Modulationsschritt in der Übertragung der Trägerwelle über eine vorgegebene kurze Zeitdauer resultiert und daß der zweite Modulationsschritt in einer Übertragung der Trägerwelle über eine vorgegebene lange Zeitdauer resultiert, wobei die kurze Zeitdauer erheblich kürzer als die Dauer einer gegebenen, vorbestimmten Referenzzeit ist und wobei die lange Zeitdauer erheblich länger als die Referenzzeit ist.

10. Anordnung nach Anspruch 9, dadurch **gekennzeichnet**, daß der erste Modulationsschritt für den Datenleiter (4, 8) und der zweite Modulationsschritt für den Taktsignalleiter (5, 10) verwendet wird.

11. Anordnung nach Anspruch 9 oder 10, dadurch **gekennzeichnet**, daß die Trägerfrequenz in Bezug auf die Datengeschwindigkeit hoch ist.

12. Anordnung nach Anspruch 9, 10 oder 11, dadurch **gekennzeichnet**, daß der Empfänger (2; 100) einen Gleichrichter (102) aufweist, der derart wirkt, daß er die empfangene Trägerwelle gleichrichtet und damit das Modulationssignal für den Modulator (3) neu gestaltet.

13. Anordnung nach Anspruch 9, 10, 11 oder 12, dadurch **gekennzeichnet**, daß der Empfänger (2; 100) derart wirkt, daß er das Modulationssignal für den Modulator (3) neu gestaltet, daß der Demodulator (6) eine Zeitvergleichschaltung (103, 104) aufweist, die derart gebildet ist, daß sie die Impulslänge der verschiedenen empfangenen Impulse mit der Referenzzeit vergleicht, und daß der Demodulator (6) mit zwei Ausgängen (112, 113) versehen und derart ausgebildet ist, daß er ein Datenleitersignal (V7) an einem ersten Ausgang (112) und ein Taktleitersignal (V8) an dem anderen Ausgang (113) erzeugt.

14. Anordnung nach Anspruch 13, dadurch **gekennzeichnet,** daß der Demodulator (6) eine Detektordiode in dem Gleichrichter aufweist, und daß die Zeitvergleichschaltung einen Multivibrator (103) und eine RC-Schaltung (104) aufweist.

15. Anordnung nach Anspruch 14, dadurch **gekennzeichnet**, daß der Ausgang (105) des Multivibrators (103) und der Ausgang (106) der Detektordiode mit den Eingängen von zwei Flip-Flop-Schaltungen (109, 110) verbunden sind, die durch einen Detektor (111) zur Aufnahme von Flanken in dem Signal von diesen beiden zuletzt genannten Ausgängen (105, 106) getriggert werden sollen, und daß die Flip-Flop-Schaltungen (109, 110) derart wirken, daß sie an den Modulator (3) abgegebene Signale neu gestalten, wobei eine Schaltung (109) der Flip-Flop-Schaltungen derart wirkt, daß sie das Datensignal (V7) erzeugt, und wobei die andere Schaltung (110) derart wirkt, daß sie das Taktsignal (V8) erzeugt.

16. Anordnung nach Anspruch 14 oder 15, dadurch **gekennzeichnet**, daß die Detektordiode ein Modulator ist, der derart wirkt, daß er Daten erneut sendet, wenn ein Signal an die Detektordiode angelegt ist, wobei die Detektordiode dafür vorgesehen ist, die Impedanz zu verändern.

17. Anordnung nach einem der Ansprüche 9 bis 16, dadurch **gekennzeichnet,** daß der Modulator derart wirkt, daß er die Trägerwelle derart moduliert, daß der erste Modulationsschritt nur in einer kurzen Übertragungsunterbrechung resultiert, und daß der zweite Modulationsschritt in zwei kurzen Übertragungsunterbrechungen resultiert.

## Revendications

1. Dispositif pour la radiotransmission de signaux reçus via un bus de données série à deux conducteurs, dans lequel les signaux de données comprennent un flanc positif et un flanc négatif, ou vice versa, qui ne coïncident pas avec un flanc positif ou négatif des signaux d'horloge, le bus de données comprenant un conducteur d'horloge (4) et un conducteur de données (5) branchés à un émetteur, un récepteur (2) et un démodulateur (6), l'émetteur comprenant un oscillateur (1) et le bus comprenant en outre un modulateur (3) servant à moduler le signal généré par l'oscillateur respectivement en fonction du signal du conducteur d'horloge et du signal du conducteur de données, dispositif caractérisé en ce que, sur le signal généré par l'oscillateur, deux étapes de modulation significatives séparées qui ne coïncident pas en temps, sont effectuées par le modulateur (3) de manière à former ainsi deux canaux de signaux mutuellement indépendants (4, 8 ; 5, 10) dont le premier canal (4, 8) est destiné aux données tandis que le second canal (5, 10) est destiné à l'horloge ; en ce que la démodulation du signal ainsi modulé reçu par le récepteur (2) est effectuée par le démodulateur pour reproduire ainsi les deux signaux ; et en ce que le démodulateur est muni d'une sortie de conducteur d'horloge (9 ; 67 ; 113) et d'une sortie de conducteur de données (7 ; 66 ; 112).

2. Dispositif selon la revendication 1, caractérisé en ce que le modulateur (3) sert à effectuer les deux étapes de modulation respectives sur deux parties significatives différentes respectives du signal généré par l'oscillateur (1).

3. Dispositif selon l'une quelconque des revendications 1 et 2, caractérisé en ce que le modulateur (3) sert à créer le premier canal (4, 8) en effectuant une étape de modulation dans laquelle uniquement les demi-périodes positives du signal alternatif généré par l'oscillateur (1), sont modulées ; et en ce que le modulateur (3) sert à créer le second canal (5, 10) en effectuant une étape de modulation dans laquelle uniquement les demi-périodes négatives du signal alternatif généré par l'oscillateur (1), sont modulées.

4. Dispositif selon l'une quelconque des revendications 1 à 3, caractérisé en ce que le modulateur (3) sert à moduler les demi-périodes de façon que l'amplitude d'une demi-période modulée sur le signal (I) émis, soit constante pendant toute la durée ou pendant une partie seulement de la durée de cette demi-période.

5. Dispositif selon l'une quelconque des revendications 1 à 4, caractérisé en ce que la radiotransmission est effectuée au moyen d'un dispositif de transmission par induction dans lequel l'émetteur (1) comprend une bobine (11) et le récepteur (2) comprend une bobine (12).

6. Dispositif selon l'une quelconque des revendications 3 à 5, caractérisé en ce que le récepteur (2) comprend un pont de redressement (20) ; en ce que le démodulateur (6) comprend deux circuits logiques (30, 31) dont le premier circuit (30) est branché aux bornes d'une diode (32) du pont de redressement de manière à extraire les demi-périodes positives du signal reçu, et dont le second circuit (31) est branché aux bornes d'une diode (33) du pont de redressement de manière à extraire les demi-périodes négatives du signal reçu ; en ce que les circuits logiques (30, 31) sont disposés de manière à produire, à leurs sorties respectives (34 ; 35), des trains d'impulsions (V1′ ; V2′) correspondant respectivement aux demi-périodes positives et aux demi-périodes négatives ; et en ce que le démodulateur (6) comprend des circuits (50, 51, 60, 61) destinés à séparer les demi-périodes positives modulées, des demi-périodes négatives modulées.

7. Dispositif selon la revendication 6, caractérisé en ce que les sorties (34, 35) des deux circuits logiques (30, 31) sont branchées à deux ce qu'on appelle compteurs à un seul pas (50, 51) ou à des dispositifs correspondants, de manière à obtenir un signal caractéristique (V1˝′) à la sortie (52) du premier compteur à un seul pas (50) lorsqu'une demi-période positive est modulée par le modulateur (3), et de manière à obtenir un signal caractéristique (V2˝′) à la sortie (53) de l'autre compteur à un seul pas (51) lorsqu'une demi-période négative est modulée.

8. Dispositif selon l'une quelconque des revendications 6 et 7, caractérisée en ce que les sorties (34, 35) des circuits logiques (30, 31) sont branchées à un circuit de déclenchement (56-58) comprenant une porte OU (56), un filtre passe-bas (57) et un circuit inverseur (58), la sortie (59) du circuit de déclenchement étant branchée à deux ce qu'on appelle circuits de verrous (60, 61) dans lesquels une entrée (62) du circuit de verrou (60) est également branchée à la sortie (52) du premier compteur à un seul pas (50), tandis que l'autre entrée (63) des circuits de verrous est branchée à la sortie (53) de l'autre compteur à un seul pas (51).

9. Dispositif selon la revendication 1, caractérisé en ce que le modulateur (3) sert à moduler une onde porteuse et à effectuer les deux étapes de modulation respectives de façon qu'une première étape de modulation conduise à la transmission de l'onde porteuse sur une période de temps courte prédéterminée, et de façon que la seconde étape de modulation conduise à la transmission de l'onde porteuse sur une période de temps longue prédéterminée, la période de temps courte étant nettement plus courte que la durée d'un temps de référence prédéterminé donné, et la période de temps longue étant nettement plus longue que le temps de référence.

10. Dispositif selon la revendication 9, caractérisé en ce que la première étape de modulation est utilisée pour le conducteur de données (4, 8), et en ce que la seconde étape de modulation est utilisée pour le conducteur d'horloge (5, 10).

11. Dispositif selon l'une quelconque des revendications 9 et 10, caractérisé en ce que la fréquence porteuse est élevée par rapport à la vitesse des données.

12. Dispositif selon l'une quelconque des revendications 9 à 11, caractérisé en ce que le récepteur (2 ; 100) comprend un redresseur (102) servant à redresser l'onde porteuse reçue pour reproduire ainsi le signal de modulation du modulateur (3).

13. Dispositif selon l'une quelconque des revendications 9 à 12, caractérisé en ce que le récepteur (2 ; 100) sert à reproduire le signal de modulation du modulateur (3) ; en ce que le démodulateur (6) comprend un circuit de comparaison de temps (103, 104) conçu pour comparer au temps de référence la longueur d'impulsion des diverses impulsions reçues ; et en ce que le démodulateur (6) est muni de deux sorties (112, 113) et conçu pour produire un signal de conducteur de données (V7) sur une première (112) des sorties, et pour produire un signal de conducteur d'horloge (V8) sur l'autre (113) des sorties.

14. Dispositif selon la revendication 13, caractérisé en ce que le démodulateur (6) comprend une diode de détection dans le redresseur ; et en ce que le circuit de comparaison de temps comprend un multivibrateur (103) et un circuit RC (104).

15. Dispositif selon la revendication 14, caractérisé en ce que la sortie (105) du multivibrateur (103) et la sortie (106) de la diode de détection sont branchées respectivement aux entrées de deux circuits de bascules (109, 110) destinés à être déclenchés par un détecteur (111) pour détecter les flancs du signal provenant de ces deux dernières sorties indiquées (105, 106) ; et en ce que les circuits de bascules (109, 110) servent à reproduire les signaux envoyés au modulateur (3), un circuit (109) de ces circuits de bascules servant à produire le signal de données (V7) tandis que l'autre circuit (110) sert à produire le signal d'horloge (V8).

16. Dispositif selon l'une quelconque des revendications 14 et 15, caractérisé en ce que la diode de détection fonctionne en modulateur pour retransmettre les données lorsqu'un signal est appliqué à la diode de détecteur, cette diode de détecteur étant destinée à changer d'impédance.

17. Dispositif selon l'une quelconque des revendications 9 à 16, caractérisé en ce que le modulateur sert à moduler l'onde porteuse de façon que la première étape de modulation donne simplement une courte interruption de transmission, et de façon que la seconde étape de modulation donne deux courtes interruptions de transmission.
